# FASCICULE DE BREVET EUROPEEN

(11) **EP 3 057 840 B1**
(45) Date de publication et mention de la délivrance du brevet: **04.12.2019**
(21) Numéro de dépôt: 14787235.2
(22) Date de dépôt: 02.10.2014
(51) Int. Cl.: B60W 50/029, B60W 50/035, B60W 20/00, B60W 50/00

(54) **SYSTÈME ET PROCÉDÉ DE CONTRÔLE DE VÉHICULE AVEC GESTION DE DÉFAUTS**
SYSTEM UND VERFAHREN ZUR STEUERUNG EINES FAHRZEUGS MIT FEHLERMANAGEMENT
SYSTEM AND METHOD FOR CONTROLLING A VEHICLE WITH FAULT MANAGEMENT

(30) Priorité: 17.10.2013 FR 1360089
(43) Date de publication de la demande: 24.08.2016
(73) Titulaire: Renault S.A.S., 92100 Boulogne-Billancourt (FR)
(72) Inventeur: KETFI-CHERIF, Ahmed, F-78990 Elancourt (FR); LAUNAY, Grégory, F-75015 Paris (FR); MALOUM, Abdelmalek, F-94550 Chevilly Larue (FR); SCHEFFGES, Olivier, F-92140 Clamart (FR); DEBERT, Maxime, F-78000 Versailles (FR)
(86) Numéro de dépôt international: PCT/FR2014/052506
(87) Numéro de publication internationale: WO 2015/055914

(56) Documents cités:
- DE-A1- 10 357 922
- DE-A1-102004 058 996
- DE-A1-102006 056 668
- DE-A1-102007 010 264
- DE-A1-102011 115 854
- FR-A1- 2 925 408

## Description

L'invention concerne les véhicules, notamment les véhicules automobiles, et plus particulièrement les systèmes de contrôle des groupes motopropulseurs et autres organes de véhicule automobile, en particulier pour la gestion de dysfonctionnements du système de contrôle et/ou des organes du véhicule.

Le document FR2925408 divulgue un système et un procédé de contrôle de groupe motopropulseur de véhicule avec gestion de pannes ou défauts, exploitant une modularité des fonctions contrôlées. Chaque module fonctionnel traite indépendamment les entrées qu'il contrôle en relation avec les pannes associées, facilitant ainsi les modifications structurelles des entrées lors d'évolutions successives du véhicule en allégeant considérablement les coûts de développement.

Le document DE102011115845 divulgue un système de contrôle de véhicule comprenant des modules fonctionnels de commande d'organes du véhicule, un module de coordination de disponibilité relié à chaque module fonctionnel et un système de commande du véhicule en roulage autonome. Chaque module fonctionnel peut travailler en mode nominal ou en mode dégradé. Le module de coordination de disponibilité est conformé pour déterminer en fonction d'au moins une disponibilité de chaque module fonctionnel de commande et du système de commande s'il doit fonctionner dans son mode nominal ou dans son mode dégradé, de façon à activer ou désactiver le système de commande.

Un besoin supplémentaire se fait cependant ressentir pour un véhicule appelé à fonctionner globalement selon différents modes de fonctionnement. Un problème est celui de coordonner les réactions des modules aux dysfonctionnements en gardant le bénéfice de la modularité sans engendrer une complexité d'échanges entre modules. Un autre problème est celui de minimiser le besoin de modification des modules lors de modifications sur les entrées et/ou sur les modes de fonctionnement du véhicule.

L'invention a pour but de répondre aux problèmes posés par l'état antérieur de la technique.

Ainsi, selon un aspect de l'invention, il est proposé un système de contrôle de véhicule, notamment de véhicule automobile, comprenant des modules fonctionnels de commande d'organes du véhicule et un module de gestion de défauts générant des signaux de défauts confirmés à partir d'informations de défauts. Le système de contrôle est remarquable en ce qu'il comprend un module de gestion globale de modes de fonctionnement du véhicule, agencé pour générer un signal de mode lorsqu'il détecte au moins un signal de défaut confirmé et pour distribuer sur les modules fonctionnels ledit signal de mode comportant une instruction aux modules fonctionnels de commander les organes du véhicule dans un mode contraint de fonctionnement en relation avec le ou lesdits signaux de défaut confirmé détectés.

Particulièrement, le système de contrôle de véhicule comprend un module de traitement d'entrées agencé pour générer des informations quantificatives et/ou logiques à destinations des modules fonctionnels et des informations de défauts à destination du module de gestion de défauts.

Particulièrement aussi, au moins un module fonctionnel du système de contrôle de véhicule est agencé pour générer des informations quantificatives et/ou logiques à destinations d'autres modules fonctionnels et des informations de défauts à destination du module de gestion de défauts.

Avantageusement, au moins deux modules fonctionnels comprennent chacun un sous-module de gestion dédiée de modes contraints agencé pour répondre à ladite instruction du signal de mode de façon à commander en conséquence les organes du véhicule commandés par le module fonctionnel.

Dans le système de contrôle de véhicule, le sous-module de gestion dédiée de modes contraints peut comporter au moins deux composants de pilotage des organes du véhicule commandés par le module fonctionnel qui comprend le sous-module de gestion dédiée de modes contraints et le sous-module de gestion dédiée de modes contraints peut comprendre un sélecteur pour activer l'un des composants en fonction du signal de mode.

Dans un mode de réalisation du système de contrôle de véhicule un composant de pilotage est adapté pour commander lesdits organes en mode de fonctionnement thermique uniquement ou alternativement en mode de fonctionnement électrique uniquement du véhicule.

Selon aussi un aspect de l'invention, il est proposé un procédé de contrôle de véhicule, notamment de véhicule automobile, comprenant des étapes consistant à générer des signaux de défauts confirmés à partir d'informations de défauts en relation avec des organes du véhicule commandés par fonctions, et à générer et distribuer un signal de mode comportant une instruction de commander les organes du véhicule dans un mode contraint de fonctionnement en relation avec le ou lesdits signaux de défaut confirmé détectés de sorte que plusieurs fonctions partagent le même mode contraint de fonctionnement du véhicule.

Particulièrement, le procédé de contrôle de véhicule comprend des étapes consistant à sélectionner le mode contraint de fonctionnement en fonction d'au moins un état d'organe du véhicule.

Selon encore un aspect de l'invention, il est proposé un programme d'ordinateur comprenant des instructions de code de programme pour l'exécution des étapes du procédé lorsque ledit programme est exécuté sur un ou plusieurs ordinateurs.

D'autres avantages et caractéristiques de l'invention apparaîtront à la l'examen de la description détaillée de modes de mise en œuvre et de réalisation, nullement limitatifs, sur lesquels :
- la figure 1 illustre schématiquement un mode de réalisation et de mise en œuvre de l'invention ;
- la figure 2 illustre schématiquement un détail de réalisation et de mise en œuvre de l'invention ;
- les figures 3 à 6 illustrent des étapes possibles de procédé conforme à l'invention.

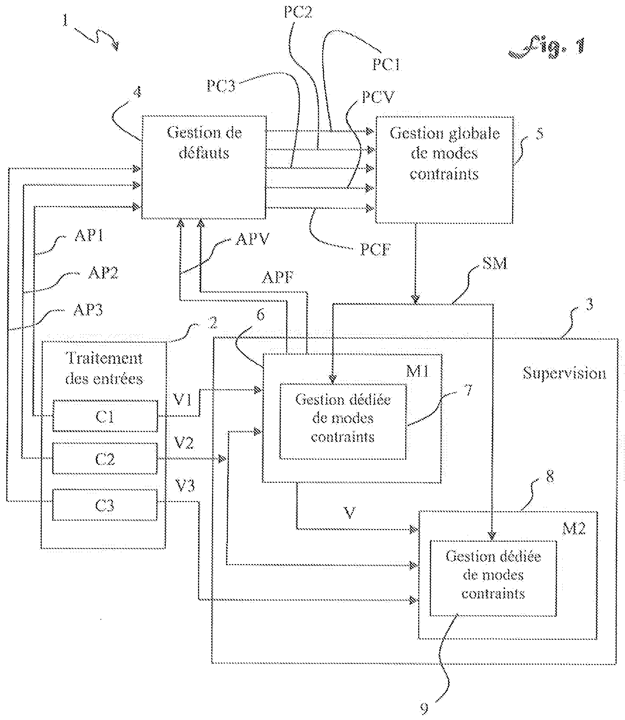

Sur la figure 1, la référence 1 désigne un système de contrôle de véhicule automobile, parmi différents types possibles dont à titre purement illustratif et non exhaustif, à moteur thermique essence ou Diesel, à un ou plusieurs moteurs électriques, à entrainement hybride thermique-électrique, à conduite manuelle, autonome ou télécommandée ou d'autre type à plusieurs modes de fonctionnement. Le système de contrôle est à architecture modulaire en ce sens qu'il comporte différents modules incorporés par exemple de façon logicielle au sein d'un ou plusieurs calculateurs de contrôle, comme par exemple un module 4 de gestion de défauts, et différents modules fonctionnels 6, 8 configurés pour contrôler et commander au sein du système chacun un fonctionnement M1, M2 d'un organe ou d'un groupe d'organes du véhicule. Sur la figure 1 seulement deux modules fonctionnels sont représentés mais on comprendra aisément que le nombre de modules fonctionnels peut tout aussi bien être supérieur à deux dans un véhicule automobile, généralement de l'ordre de plusieurs dizaines.

Le système de contrôle 1 comporte par ailleurs un module 2 de traitement des entrées comprenant des entrées C1, C2, C3 attribuées chacune à un signal analogique ou numérique reçu par fil ou par bus de données en provenance de capteurs, d'interfaces de commande ou d'autres systèmes, par exemple de télécommunications. Le module 2 est agencé pour délivrer à partir des entrées, des informations V1, V2, V3, quantificatives et/ou logiques aux différents modules fonctionnels 6, 8. Par exemple une information à partir d'une entrée reliée à un capteur est typiquement une valeur de mesure ou de détection, à partir d'une entrée reliée à une interface de commande est typiquement une valeur numérique de consigne ou binaire de commande. Par exemple encore une information à partir d'une entrée reliée à un système de télécommunications est de manière possible une séquence d'instructions ou de paramétrage d'actionneurs.

Par exemple pour un fonctionnement M1 lié à l'injection en carburant d'un moteur thermique, les organes comprennent les injecteurs et la ou les pompes d'alimentation en carburant. Les informations V1, V2 reçue à titre illustratif par le module 6 concernent alors par exemple respectivement la vitesse de rotation du moteur thermique et la course de la pédale d'accélérateur. A partir des informations reçues dont V1 et V2 font partie, le module 6 élabore des signaux pour contrôler par exemple le débit de carburant fourni par les injecteurs et l'une des pompes d'alimentation. Le module 6 peut aussi élaborer une ou plusieurs informations V à destination d'autres modules au sein d'un ensemble de supervision 3 qui regroupe les modules fonctionnels 6, 8.

Par exemple pour un fonctionnement M2 lié à la régulation de courant d'une machine électrique, les organes comprennent l'électronique de puissance connectés à la batterie de traction et/ou à la batterie de servitude. Les informations V2, V3 reçue à titre illustratif par le module 8 concernent alors par exemple respectivement la course de la pédale d'accélérateur et le retour courant traversant la machine électrique. Le module 8 peut aussi recevoir par exemple l'information V élaborée par le module 6 pour communiquer une valeur de couple générée par le moteur thermique. A partir des informations reçues dont V, V2 et V3 font partie, le module 8 élabore des signaux pour contrôler par exemple le courant débité par l'électronique de puissance de façon à donner à une ou plusieurs roues du véhicule un couple en complément de celui fourni par le moteur thermique ou à recharger la ou l'une des batteries du véhicule. Le module 8 peut aussi élaborer d'autres informations non représentées sur la figure, à destination du module 6 ou d'autres modules au sein de l'ensemble de supervision 3.

Le module 2 de traitement des entrées C1, C2, C3 est agencée de manière connue en soi pour détecter des défaillances potentielles ou plus généralement des défauts de l'acquisition des signaux qui leurs sont associés. Un défaut est par exemple détecté en cas de réception hors échelle d'un signal analogique en tension, d'une absence de signal analogique en courant ou encore d'une incohérence de contrôle de parité d'un signal numérique. En relation avec les entrées C1, C2, C3, le module de traitement est agencé pour délivrer des informations de défaillance ou de défauts AP1, AP2, AP3 au module 4 de gestion de défauts.

Les entrées du système dans un véhicule se chiffrent rapidement par dizaines, voire par centaines et l'objet de l'exposé n'est pas ici de toutes les représenter mais d'en décrire l'architecture et la façon de les traiter.

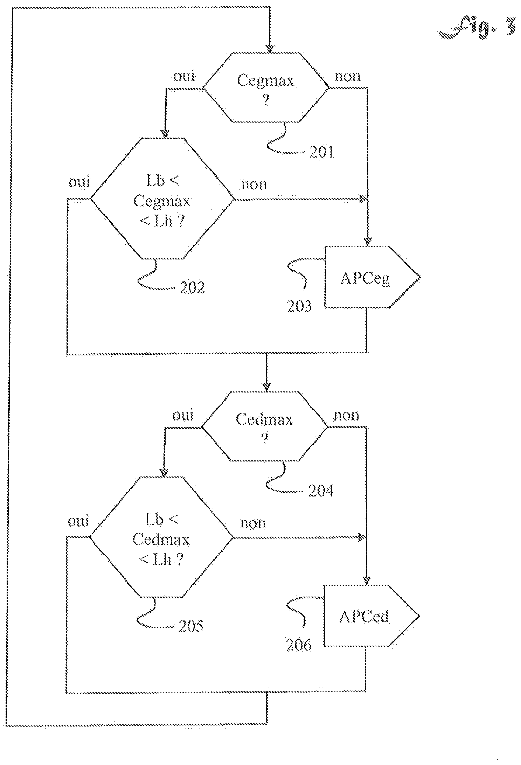

Le module 2 peut impliquer un programme d'ordinateur comprenant des instructions de code de programme pour l'exécution des étapes de procédé présentées à titre purement illustratif et non exhaustif en référence à la figure 3, lorsque le programme est exécuté sur un ordinateur de type calculateur temps réel en lien avec le module 2.

Considérons par exemple le cas d'un contrôleur de deux machines électriques (non représentées) dédiées chacune respectivement à une roue gauche et à une roue droite du véhicule. Lorsque le contrôleur (non représenté) envoie régulièrement un signal Cegmax, Cedmax, au superviseur 3 renseignant le couple maximum applicable sur respectivement la machine électrique gauche et la machine électrique droite, une non réception de l'un des signaux en étape 201, 204, ou une non réception de valeur valide de couple maximum gauche ou droit en étape 202, 205, active une étape 203, 206 qui consiste à générer une information de défaut respectivement APCeg, APCed, du type des informations AP1, AP2, AP3 et ceci quel que soit le mode de roulage, en d'autres termes thermique ou électrique.

De façon comparable, les modules fonctionnels 6, 8 sont agencés ou non pour détecter des défaillances potentielles ou plus généralement des défauts d'informations élaborées à destination d'autres modules ou des défauts fonctionnels. Un défaut relatif à une fonction F est par exemple détecté en cas d'incohérence entre des informations en provenance du module 2 de traitement des entrées ou d'autres modules fonctionnels, en comparaison avec un modèle comportemental préalablement établi. Un défaut relatif à une information V élaborée à destination d'un ou plusieurs autres modules et par exemple détecté lorsque les informations reçues en entrée du module fonctionnel conduisent à une information erronée ou contextuellement douteuse. En relation avec les fonctions F traitées et les informations V élaborées par un module fonctionnel, le module fonctionnel est agencé pour délivrer des informations de défaillance ou de défauts APV, APF au module 4 de gestion de défauts.

A partir des informations de défaillance ou de défauts AP1, AP2, AP3, APV, APF, le module 4 de gestion de défauts génère des signaux de défauts confirmés PC1, PC2, PC3, PCV, PCF, par exemple des booléens, à destination d'un module 5 de gestion globale de modes contraints. Un défaut est dit confirmé lorsqu'il résulte par exemple d'une répétition d'indications de défaillance ou de défaut, émises par le module 2 de traitement des entrées vers le module 4 de gestion de défauts.

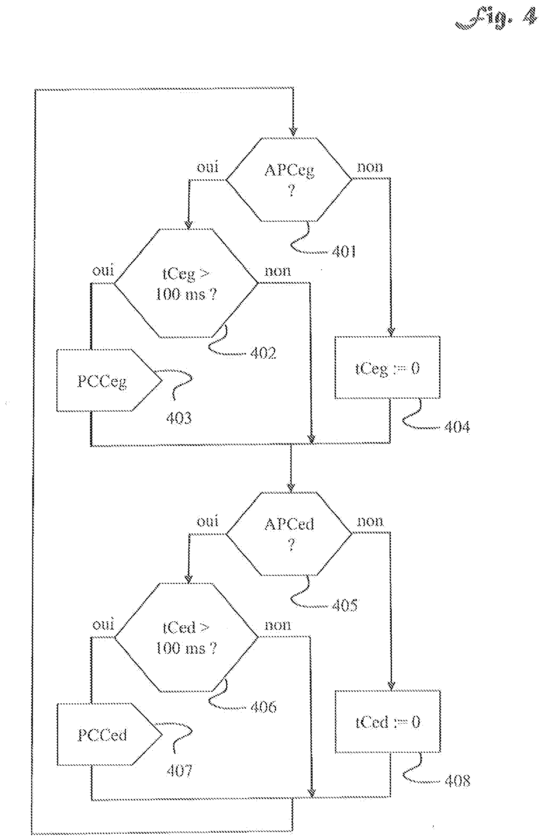

Le module 4 peut impliquer un programme d'ordinateur comprenant des instructions de code de programme pour l'exécution des étapes de procédé présentées à titre purement illustratif et non exhaustif en référence à la figure 4, lorsque le programme est exécuté sur un ordinateur de type calculateur temps réel en lien avec le module 4.

Considérons par exemple le cas du contrôleur de deux machines électriques ci-dessus illustré par la figure 4. Le module de gestion de défauts active une étape 402, 406 lorsqu'il reçoit l'information de défaut APCeg, APCed en étape 401, 405 pour confirmer le défaut sur l'information de couple maximal si la perte est supérieure à 100ms. Les temps de confirmation de ces défauts et d'autres défauts du système, sont renseignés dans un tableau récapitulatif stocké en mémoire. Le contrôle temporel s'effectue par exemple de manière connue en incrémentant un compteur en étape 402, 406, remis à zéro en étape 404, 408 en cas de disparition de l'information de défaut en étape 401, 405. En association avec chaque défaut, une ligne du tableau peut contenir d'autres valeurs que simplement relatives à une durée comme par exemple une quantité d'apparitions de défaut par unité de temps. Les étapes du procédé sont adaptées en conséquence. Une fois le défaut confirmé, le module de gestion de défauts avertit le module 5 de gestion globale de modes contraints en étape 403, 407 qui consiste essentiellement à générer les signaux de défauts confirmés PCCeg, PCCed de type PC1, PC2, PC3, PCV, PCF à partir des informations de défauts APCeg, APCed de type AP1, AP2, AP3, APV, APF en relation avec les machines électriques parmi les nombreux organes du véhicule commandés par fonctions.

A partir des signaux de défauts confirmés PC1, PC2, PC3, PCV, PCF, le module 5 de gestion globale de modes contraints, comme représenté en figure 1, génère un signal de mode SM lorsqu'il détecte au moins un signal de défaut confirmé PC1, PC2, PC3, PCV, PCF en le remettant à jour, si besoin est à l'apparition de nouveaux défauts confirmés. Le module 5 de gestion globale de modes contraints distribue le signal de mode SM sur les modules fonctionnels 6, 8. Le signal de mode SM comporte une instruction partagée par l'ensemble des modules fonctionnels 6, 8, de commander les organes du véhicule dans un mode contraint de fonctionnement commun en relation avec le ou lesdits signaux de défaut confirmé détectés, comme nous le verrons dans la suite de la description.

Le module 5 possède en mémoire une liste de modes de fonctionnement prédéfinis comprenant un mode nominal associé à une absence de contraintes et des modes contraints à fonctionnement dégradé par rapport au mode nominal.

A titre purement illustratif et non limitatif, prenons par exemple le cas d'un véhicule à locomotion hybride électrique-thermique.

Le mode nominal auquel correspond par exemple une instruction N0, permet à la fois une traction par moteur thermique et une propulsion par machine électrique. Les cas « réservoir de carburant vide », « batterie déchargée » ou « vitesse supérieure à un seuil de tolérance de la machine électrique » ne sont pas des défauts mais de simples conditions de fonctionnement qui ne nuisent pas au mode nominal.

Un mode thermique uniquement auquel correspond par exemple une instruction N2, est contraint en ce qu'il ne permet pas une propulsion par machine électrique. Dans ce mode, la traction par moteur thermique est sans défaut et la ou les machines électriques est ou sont désaccouplées des roues. Parmi les défauts concernés, on peut citer une machine électrique hors service, une interruption de communications ou une batterie hors d'usage.

Un mode électrique uniquement auquel correspond par exemple une instruction N4, est contraint en ce qu'il ne permet pas une traction par moteur thermique. Dans ce mode, la propulsion par machine électrique est sans défaut et le moteur thermique est désaccouplé des roues par mise au neutre de la boîte de vitesse. Parmi les défauts concernés, on peut citer un moteur thermique hors service ou une interruption de communications.

Un mode à vitesse limité auquel correspond par exemple une instruction D3, est contraint en ce qu'il ne permet pas de dépasser un seuil de vitesse imposé par des contraintes mécaniques comme une tenue en rotation d'un rotor de machine électrique. Dans ce mode, la locomotion par moteur thermique et/ou par machines électriques est possible mais avec perte de mode refuge par perte de possibilité de désaccouplement de machine électrique à une roue.

Un mode en roulage possible jusqu'à l'arrêt auquel correspond par exemple une instruction D4, est contraint en ce qu'il se limite à un roulage jusqu'à l'arrêt sur volonté du conducteur. Parmi les défauts concernés, on peut citer un blocage sur rapport engagé de boîte de vitesse robotisée ou un levier de commande de boîte de vitesse hors service.

Un mode perte d'afficheur auquel correspond par exemple une instruction D6, est contraint par une perte d'afficheur spécifique.

Un mode panne auquel correspond par exemple une instruction P, est contraint par une immobilisation ultime du véhicule.

Un ensemble de règles par exemple permet d'activer le mode de fonctionnement pertinent indiqué dans l'action de la règle, la prémisse contenant une équation combinatoire de défauts confirmés et si besoin, d'autres informations sur l'état de différents organes du véhicule.

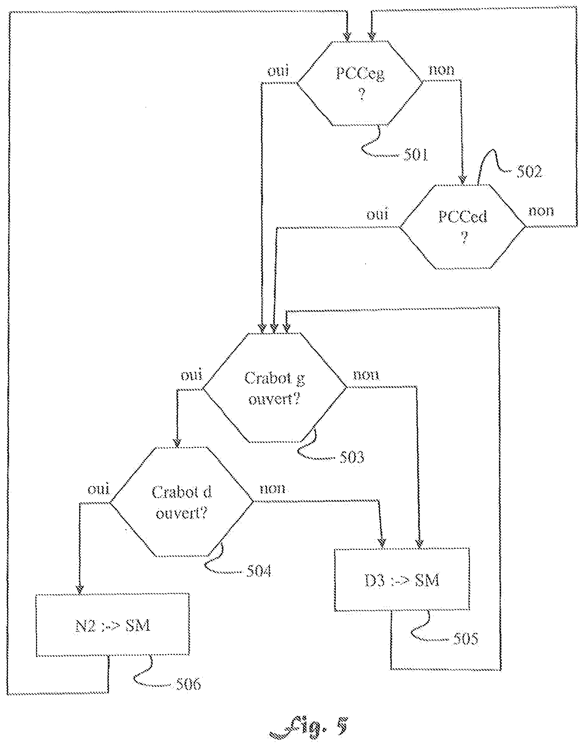

Le module 5 peut aussi impliquer un programme d'ordinateur comprenant des instructions de code de programme pour l'exécution des étapes de procédé présentées à titre purement illustratif et non exhaustif en référence à la figure 5, lorsque le programme est exécuté sur un ordinateur de type calculateur temps réel en lien avec le module 5.

Considérons par exemple ici encore le cas du contrôleur de deux machines électriques ci-dessus illustré par la figure 3. Le module 5 de gestion active une étape 503, 504 lorsqu'il reçoit le signal de défaut confirmé PCCeg, PCCed en étape 501, 502 pour sélectionner le mode qui convient.

Ainsi une étape 506 consiste à charger l'instruction N2 dans le signal SM pour enclencher le mode thermique uniquement si et seulement si le crabot est constaté ouvert d'une manière sûre en étape 503, 504. Sinon une étape 505 consiste à charger l'instruction D3 dans le signal SM pour enclencher le mode vitesse limitée.

Chaque module fonctionnel 6, 8, comporte par ailleurs un sous-module 7, 9 de gestion dédiée de modes contraints de fonctionnement du ou des organes du véhicule qui est ou qui sont contrôlés et commandés par le module 6, 8.

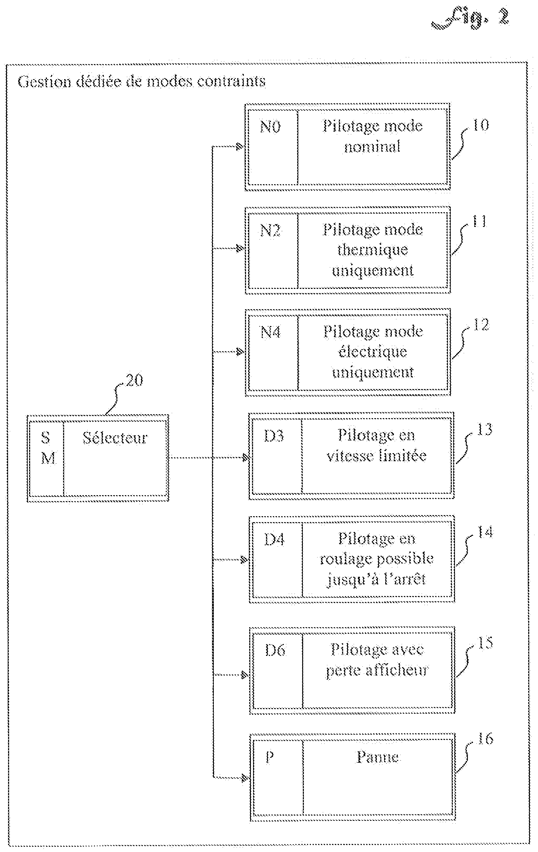

La figure 2 illustre une réalisation possible de sous module de gestion dédiée de modes contraints, conforme à l'invention.

Le sous module ici représenté, effectue une gestion de modes contraints ou non qui est dédiée au fonctionnement M1, M2 de l'organe ou des organes qui sont contrôlés et commandés par le module fonctionnel auquel le sous-module appartient.

Le sous-module comprend au moins deux composants associés chacun à un mode de fonctionnement du véhicule.

Un composant 10 est agencé pour effectuer un pilotage du fonctionnement M1, M2 du ou des organes qui correspond à un mode nominal de fonctionnement du véhicule. Le mode nominal de fonctionnement du véhicule est non contraint en ce sens qu'en absence de défaut, il permet d'exploiter toutes les fonctionnalités prévues dans le véhicule pour répondre à la volonté de l'utilisateur et aux éléments de contexte environnemental du véhicule. On comprendra par exemple qu'un niveau de carburant dans le réservoir n'est pas un défaut mais un élément de contexte environnemental tout autant qu'un état de route carrossable ou non.

Par exemple le mode nominal de fonctionnement d'un véhicule hybride autorise son mode de fonctionnement thermique, son mode de fonctionnement électrique et la combinaison des modes électriques et thermiques dans les conditions initialement prévues au cahier des charges du véhicule.

Par exemple encore le mode nominal de fonctionnement d'un véhicule en conduite mixte autonome-manuelle, autorise son mode de fonctionnement manuel, son mode de fonctionnement autonome et le passage d'un mode de conduite à l'autre dans les conditions initialement prévues au cahier des charges du véhicule.

Une convention de nommage partagée de préférence au moins par le module 5 de gestion globale de modes contraints et par les sous-modules 7, 9, de gestion dédiée de modes contraints, permet d'adresser le composant 10 au moyen d'un index N0.

De même que le composant 10 de pilotage, des composants 11, 12, 13,14, 15, 16 de pilotage sont dédiés spécifiquement aux organes du véhicule qui sont contrôlés et commandés par le module fonctionnel auquel appartient le sous-module de gestion dédiée de modes contraints.

La convention de nommage partagée, permet d'adresser chacun des composants 11, 12, 13,14, 15, 16 au moyen respectivement d'un index N1, N4, D3, D6, P.

Le composant 11 est agencé pour effectuer un pilotage du fonctionnement M1, M2 du ou des organes qui correspond à un mode thermique uniquement de fonctionnement du véhicule. Le mode thermique uniquement de fonctionnement du véhicule est contraint en ce sens qu'une existence de défaut, ne permet d'exploiter que les fonctionnalités prévues dans le véhicule pour une propulsion purement thermique.

Par exemple le mode thermique uniquement de fonctionnement d'un véhicule hybride n'autorise ni son mode de fonctionnement électrique, ni la combinaison des modes électriques et thermiques.

Ainsi, en reprenant l'exemple évoqué ci-dessus du module fonctionnel 6 qui contrôle et commande le fonctionnement M1 lié à l'injection en carburant du moteur thermique, dans un cas usuel où les organes comprenant les injecteurs et la ou les pompes d'alimentation en carburant, peuvent être pilotés de manière identique en mode nominal et en mode thermique uniquement de fonctionnement du véhicule, le composant 11 peut se confondre avec le composant 10.

Dans l'exemple évoqué ci-dessus du module fonctionnel 8 qui contrôle et commande le fonctionnement M2 lié à la régulation de courant d'une machine électrique, pour les organes comprenant l'électronique de puissance connectés à la batterie de traction et/ou à la batterie de servitude qui n'ont pas lieu de fonctionner en mode thermique uniquement de fonctionnement du véhicule, le composant 11 peut se réduire à une commande de coupure de l'électronique de puissance avec contrôle, si besoin est, du désaccouplement de la machine électrique sur la ou les roues entraînées.

Le composant 12 est agencé pour effectuer un pilotage du fonctionnement M1, M2 du ou des organes qui correspond à un mode électrique uniquement de fonctionnement du véhicule. Le mode électrique uniquement de fonctionnement du véhicule est contraint en ce sens qu'une existence de défaut, ne permet d'exploiter que les fonctionnalités prévues dans le véhicule pour une propulsion purement électrique.

Par exemple le mode électrique uniquement de fonctionnement d'un véhicule hybride n'autorise ni son mode de fonctionnement thermique, ni la combinaison des modes électriques et thermiques.

Ainsi, en reprenant l'exemple évoqué ci-dessus du module fonctionnel 6 qui contrôle et commande le fonctionnement M1 lié à l'injection en carburant du moteur thermique, pour les injecteurs et la ou les pompes d'alimentation en carburant qui n'ont pas lieu de fonctionner en mode électrique uniquement, le composant 12 peut se réduire à une commande de leur coupure avec contrôle, si besoin est, du désaccouplement du moteur sur la ou les roues entraînées.

Dans l'exemple évoqué ci-dessus du module fonctionnel 8 qui contrôle et commande le fonctionnement M2 lié à la régulation de courant de la machine électrique, les organes comprenant l'électronique de puissance connectés à la batterie de traction et/ou à la batterie de servitude peuvent fonctionner en mode électrique uniquement de fonctionnement du véhicule, de façon comparable au mode nominal. Dans le module fonctionnel 8, le composant 12 peut alors se confondre avec le composant 10.

Le composant 13 est agencé pour effectuer un pilotage du fonctionnement M1, M2 du ou des organes qui correspond à un mode de fonctionnement du véhicule en vitesse limitée. Le mode de fonctionnement du véhicule en vitesse limitée en deçà d'un seuil, est contraint en ce sens qu'une existence de défaut, ne permet pas d'exploiter les fonctionnalités prévues dans le véhicule pour une propulsion à une vitesse supérieure au seuil.

Ainsi, en reprenant l'exemple évoqué ci-dessus du module fonctionnel 6 qui contrôle et commande le fonctionnement M1 lié à l'injection en carburant du moteur thermique, respectivement du module fonctionnel 8 qui contrôle et commande le fonctionnement M2 lié à la régulation de courant d'une machine électrique, les organes comprenant les injecteurs et la ou les pompes d'alimentation en carburant, respectivement les organes comprenant l'électronique de puissance connectés à la batterie de traction et/ou à la batterie de servitude, peuvent être pilotés de manière bridée par rapport au mode nominal et au mode thermique uniquement, respectivement et au mode électrique uniquement de fonctionnement du véhicule. Le composant 13 peut comprendre des limitations de consignes appliquées dans l'un des composants 10, 11, respectivement dans l'un des composants 10, 12.

Le composant 14 est agencé pour effectuer un pilotage du fonctionnement M1, M2 du ou des organes qui correspond à un mode de fonctionnement du véhicule en roulage possible jusqu'à l'arrêt. Le mode de fonctionnement du véhicule en roulage possible jusqu'à l'arrêt, est contraint en ce sens qu'une existence de défaut, demande à arrêter le véhicule au plus vite et dans les meilleures conditions.

Ainsi, en reprenant l'exemple évoqué ci-dessus du module fonctionnel 6 qui contrôle et commande le fonctionnement M1 lié à l'injection en carburant du moteur thermique, respectivement du module fonctionnel 8 qui contrôle et commande le fonctionnement M2 lié à la régulation de courant d'une machine électrique, les organes comprenant les injecteurs et la ou les pompes d'alimentation en carburant, respectivement les organes comprenant l'électronique de puissance connectés à la batterie de traction et/ou à la batterie de servitude, peuvent être pilotés de manière rampée jusqu'à zéro au sein du mode nominal et du mode thermique uniquement, et respectivement au sein du mode électrique uniquement de fonctionnement du véhicule. Le composant 14 peut comprendre des rampes décroissantes de consignes appliquées dans l'un des composants 10, 11, respectivement dans l'un des composants 10, 12.

Le composant 15 est agencé pour effectuer un pilotage du fonctionnement M1, M2 du ou des organes qui correspond à un mode de fonctionnement du véhicule avec perte afficheur. Le mode de fonctionnement du véhicule avec perte afficheur, est contraint en ce sens qu'une existence de défaut, ne permet plus d'obtenir les données relatives au véhicule sur les afficheurs.

Le composant 16 est agencé pour effectuer un pilotage du fonctionnement M1, M2 du ou des organes qui correspond à un mode de fonctionnement du véhicule en panne. Le mode de fonctionnement du véhicule en panne, est contraint en ce sens qu'une existence de défaut, ne permet plus de faire fonctionner le véhicule.

On comprendra que les composants de pilotage décrits si dessus ne le sont qu'à titre illustratif et non impératif. Ils peuvent être remplacés ou combinés avec d'autres composants de pilotage en fonction du type de véhicule.

Par exemple dans un véhicule sans machine électrique d'entraînement, le composant de pilotage 12 et l'un ou l'autre des composants 10, 11, peuvent être supprimés, le mode nominal correspondant au mode thermique uniquement.

De même dans un véhicule sans moteur thermique d'entraînement, le composant de pilotage 11 et l'un ou l'autre des composants 10, 12, peuvent être supprimés, le mode nominal correspondant au mode électrique uniquement.

Dans un véhicule de type bimodal manuel-autonome, on pourrait rencontrer un composant de pilotage du fonctionnement contraint en mode autonome et un composant de pilotage du fonctionnement contraint en mode manuel des organes commandés par les modules fonctionnels 6, 8. Le composant 10 de pilotage en mode nominal est alors prévu pour offrir la possibilité de fonctionner au choix en mode autonome ou en mode manuel pour satisfaire sans contrainte imposée par un défaut, la volonté de l'utilisateur ou d'automatismes de niveau applicatif supérieur.

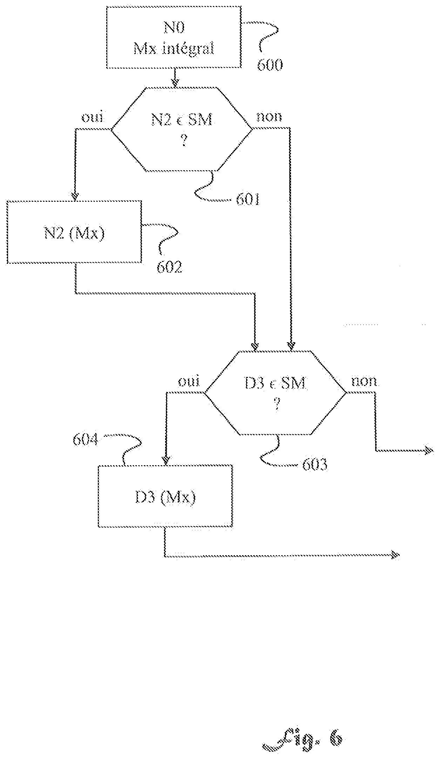

Chaque module 6, 8 peut impliquer un programme d'ordinateur comprenant des instructions de code de programme pour l'exécution des étapes de procédé présentées à titre purement illustratif et non exhaustif en référence à la figure 6, lorsque le programme est exécuté sur un ordinateur de type calculateur temps réel en lien avec le module 6, 8.

Si nous revenons par exemple au cas du contrôleur de deux machines électriques ci-dessus illustré par les figures 3 à 5, chaque fonction élémentaire M1, M2 du superviseur 3 réalise les actions nécessaires pour passer en mode appelé N2 ou D3. C'est-à-dire par exemple à partir d'un mode activé en étape précédente 600, si le mode D3 est activé en étape 603, que la répartition de couple est répartie à 100% sur le moteur thermique en étape 602 par activation du mode N2 en étape 601, un limiteur de vitesse empêche alors en étape 604 le véhicule de dépasser les 90km/h afin de protéger les machines électriques.

Le procédé se poursuit ensuite par d'autres étapes (non représentées) activer ou non d'autres modes en fonction des instructions contenues dans le signal SM.

## Revendications

1. Système de contrôle de véhicule, notamment de véhicule automobile, comprenant des modules fonctionnels (6, 8) de commande d'organes du véhicule et un module (4) de gestion de défauts générant des signaux de défauts confirmés (PC1, PC2, PC3, PCV, PCF) à partir d'informations de défauts (AP1, AP2, AP3, APV, APF), **caractérisé en ce qu'**il comprend un module (5) de gestion globale de modes de fonctionnement du véhicule, agencé pour générer un signal de mode (SM) lorsqu'il détecte au moins un signal de défaut confirmé (PC1, PC2, PC3, PCV, PCF) et pour distribuer sur les modules fonctionnels (6, 8) ledit signal de mode (SM) comportant une instruction aux modules fonctionnels (6, 8) de commander les organes du véhicule dans un mode contraint de fonctionnement en relation avec le ou lesdits signaux de défaut confirmé détectés.

2. Système de contrôle de véhicule selon la revendication 1, **caractérisé en ce qu'**il comprend un module (2) de traitement d'entrées (C1, C2, C3) agencé pour générer des informations quantificatives et/ou logiques (V1, V2, V3) à destinations des modules fonctionnels (6, 8) et des informations de défauts (AP1, AP2, AP3) à destination du module (4) de gestion de défauts.

3. Système de contrôle de véhicule selon l'une des revendications 1 ou 2, **caractérisé en ce qu'**au moins un module fonctionnel (6, 8) est agencé pour générer des informations quantificatives et/ou logiques (V) à destinations d'autres modules fonctionnels (6, 8) et des informations de défauts (APV, APF) à destination du module (4) de gestion de défauts.

4. Système de contrôle de véhicule l'une quelconque des revendications précédentes, **caractérisé en ce qu'**au moins deux modules fonctionnels (6, 8) comprennent chacun un sous-module de gestion dédiée de modes contraints (7, 9) agencé pour répondre à ladite instruction du signal de mode (SM) de façon à commander en conséquence les organes du véhicule commandés par le module fonctionnel (6, 8).

5. Système de contrôle de véhicule selon la revendication 4, **caractérisé en ce que** le sous-module de gestion dédiée de modes contraints (7, 9) comporte au moins deux composants (11, 12, 13, 14, 15) de pilotage des organes du véhicule commandés par le module fonctionnel (6, 8) qui comprend le sous-module de gestion dédiée de modes contraints (7, 9) et **en ce que** le sous-module de gestion dédiée de modes contraints (7, 9) comprend un sélecteur (20) pour activer l'un des composants en fonction du signal de mode (SM).

6. Système de contrôle de véhicule selon la revendication 5, **caractérisé en ce qu'**un composant (11) de pilotage est adapté pour commander lesdits organes en mode de fonctionnement thermique uniquement du véhicule.

7. Système de contrôle de véhicule selon la revendication 5 ou 6, **caractérisé en ce qu'**un composant (12) de pilotage est adapté pour commander lesdits organes en mode de fonctionnement électrique uniquement du véhicule.

8. Procédé de contrôle de véhicule, notamment de véhicule automobile, comprenant des étapes consistant à :
- générer (403, 407) des signaux de défauts confirmés (PC1, PC2, PC3, PCV, PCF) à partir d'informations de défauts (AP1, AP2, AP3, APV, APF) en relation avec des organes du véhicule commandés par fonctions;
- générer (505, 506) et distribuer un signal de mode (SM) comportant une instruction de commander les organes du véhicule dans un mode contraint de fonctionnement en relation avec le ou lesdits signaux de défaut confirmé détectés (PC1, PC2, PC3, PCV, PCF) de sorte que plusieurs fonctions partagent le même mode contraint de fonctionnement du véhicule.

9. Procédé de contrôle de véhicule selon la revendication 8, comprenant des étapes consistant à sélectionner (503, 504) le mode contraint de fonctionnement en fonction d'au moins un état d'organe du véhicule.

10. Programme d'ordinateur comprenant des instructions de code de programme pour l'exécution des étapes du procédé selon l'une des revendications 8 à 9 lorsque ledit programme est exécuté sur un ou plusieurs ordinateurs.

## Patentansprüche

1. System zur Kontrolle eines Fahrzeugs, insbesondere eines Kraftfahrzeugs, das Funktionsmodule (6, 8) zur Steuerung von Organen des Fahrzeugs und ein Fehlerverwaltungsmodul (4) enthält, das ausgehend von Fehlerinformationen (API, AP2, AP3, APV, APF) bestätigte Fehlersignale (PC1, PC2, PC3, PCV, PCF) generiert, **dadurch gekennzeichnet, dass** es ein globales Verwaltungsmodul (5) von Betriebsarten des Fahrzeugs enthält, das eingerichtet ist, um ein Betriebsartsignal (SM) zu erzeugen, wenn es mindestens ein bestätigtes Fehlersignal (PC1, PC2, PC3, PCV, PCF) erfasst, und um das Betriebsartsignal (SM) an die Funktionsmodule (6, 8) zu verteilen, das eine Anweisung an die Funktionsmodule (6, 8) aufweist, die Organe des Fahrzeugs in Verbindung mit dem oder den erfassten bestätigten Fehlersignalen in einer eingeschränkten Betriebsart zu steuern.

2. Fahrzeugkontrollsystem nach Anspruch 1, **dadurch gekennzeichnet, dass** es ein Verarbeitungsmodul (2) von Eingaben (C1, C2, C3) enthält, das eingerichtet ist, um quantifikative und/oder logische Informationen (V1, V2, V3) für die Funktionsmodule (6, 8) und Fehlerinformationen (AP1, AP2, AP3) für das Fehlerverwaltungsmodul (4) zu generieren.

3. Fahrzeugkontrollsystem nach einem der Ansprüche 1 oder 2, **dadurch gekennzeichnet, dass** mindestens ein Funktionsmodul (6, 8) eingerichtet ist, um quantifikative und/oder logische Informationen (V) für andere Funktionsmodule (6, 8) und Fehlerinformationen (APV, APF) für das Fehlerverwaltungsmodul (4) zu generieren.

4. Fahrzeugkontrollsystem nach einem der vorhergehenden Ansprüche, **dadurch gekennzeichnet, dass** mindestens zwei Funktionsmodule (6, 8) je ein dediziertes Verwaltungs-Teilmodul eingeschränkter Betriebsarten (7, 9) enthalten, das eingerichtet ist, auf die Anweisung des Betriebsartsignals (SM) zu reagieren, um dementsprechend die vom Funktionsmodul (6, 8) gesteuerten Organe des Fahrzeugs zu steuern.

5. Fahrzeugkontrollsystem nach Anspruch 4, **dadurch gekennzeichnet, dass** das dedizierte Verwaltungs-Teilmodul eingeschränkter Betriebsarten (7, 9) mindestens zwei Bauteile (11, 12, 13, 14, 15) zum Steuern der Organe des Fahrzeugs enthält, die von dem Funktionsmodul (6, 8) gesteuert werden, das das dedizierte Verwaltungs-Teilmodul eingeschränkter Betriebsarten (7, 9) enthält, und dass das dedizierte Verwaltungs-Teilmodul eingeschränkter Betriebsarten (7, 9) einen Wähler (20) enthält, um eines der Bauteile abhängig vom Betriebsartsignal (SM) zu aktivieren.

6. Fahrzeugkontrollsystem nach Anspruch 5, **dadurch gekennzeichnet, dass** ein Steuerbauteil (11) geeignet ist, die Organe nur in der Verbrennungsmotor-Betriebsart des Fahrzeugs zu steuern.

7. Fahrzeugkontrollsystem nach Anspruch 5 oder 6, **dadurch gekennzeichnet, dass** ein Steuerbauteil (12) geeignet ist, die Organe nur in der Elektro-Betriebsart des Fahrzeugs zu steuern.

8. Verfahren zur Kontrolle eines Fahrzeugs, insbesondere eines Kraftfahrzeugs, das Schritte enthält, die darin bestehen:
- Generieren (403, 407) bestätigter Fehlersignale (PC1, PC2, PC3, PCV, PCF) ausgehend von Fehlerinformationen (AP1, AP2, AP3, APV, APF) in Verbindung mit von Funktionen gesteuerten Organen des Fahrzeugs;
- Generieren (505, 506) und Verteilen eines Betriebsartsignals (SM), das eine Anweisung enthält, die Organe des Fahrzeugs in einer beschränkten Betriebsart in Verbindung mit dem oder den erfassten bestätigten Fehlersignalen (PC1, PC2, PC3, PCV, PCF) zu steuern, so dass mehrere Funktionen sich die gleiche beschränkte Betriebsart des Fahrzeugs teilen.

9. Fahrzeugkontrollverfahren nach Anspruch 8, das Schritte enthält, die darin bestehen, die beschränkte Betriebsart abhängig von mindestens einem Organzustand des Fahrzeugs auszuwählen (503, 504) .

10. Computerprogramm, das Programmcodeanweisungen zur Ausführung der Schritte des Verfahrens nach einem der Ansprüche 8 bis 9 enthält, wenn das Programm auf einem oder mehreren Computern ausgeführt wird.

## Claims

1. Vehicle control system, notably for a motor vehicle, comprising functional modules (6, 8) for controlling elements of the vehicle and a fault management module (4) generating confirmed fault signals (PC1, PC2, PC3, PCV, PCF) from fault data (AP1, AP2, AP3, APV, APF), **characterized in that** it includes a global management module (5) for the operating modes of the vehicle, designed to generate a mode signal (SM) when it detects at least one confirmed fault signal (PC1, PC2, PC3, PCV, PCF) and to distribute, to the functional modules (6, 8), said mode signal (SM) comprising an instruction to the functional modules (6, 8) to switch the elements of the vehicle to a restricted operating mode in relation to said confirmed fault signal or signals detected.

2. Vehicle control system according to Claim 1, **characterized in that** it includes a module (2) for processing inputs (C1, C2, C3) designed to generate quantifying and/or logical data (V1, V2, V3) intended for the functional modules (6, 8) and fault data (AP1, AP2, AP3) intended for the fault management module (4).

3. Vehicle control system according to either of Claims 1 and 2, **characterized in that** at least one functional module (6, 8) is designed to generate quantifying and/or logical data (V) intended for other functional modules (6, 8) and fault data (APV, APF) intended for the fault management module (4).

4. Vehicle control system according to any one of the preceding claims, **characterized in that** at least two functional modules (6, 8) each include a management submodule dedicated to restricted modes (7, 9) designed to respond to said instruction in the mode signal (SM) in order to control the elements of the vehicle controlled by the functional module (6, 8) accordingly.

5. Vehicle control system according to Claim 4, **characterized in that** the management submodule dedicated to restricted modes (7, 9) includes at least two components (11, 12, 13, 14, 15) for controlling the elements of the vehicle controlled by the functional module (6, 8) that includes the management submodule dedicated to restricted modes (7, 9) and **in that** the management submodule dedicated to restricted modes (7, 9) includes a selector (20) for activating one of the components as a function of the mode signal (SM).

6. Vehicle control system according to Claim 5, **characterized in that** a control component (11) is designed to control said elements in the thermal-only operating mode of the vehicle.

7. Vehicle control system according to Claim 5 or 6, **characterized in that** a control component (12) is designed to control said elements in the electric-only operating mode of the vehicle.

8. Vehicle control method, notably for a motor vehicle, comprising the following steps:
- generating (403, 407) confirmed fault signals (PC1, PC2, PC3, PCV, PCF) from fault data (AP1, AP2, AP3, APV, APF) relating to elements of the vehicle controlled by functions,
- generating (505, 506) and distributing a mode signal (SM) containing an instruction to switch the elements of the vehicle to a restricted operating mode relating to said confirmed fault signal or signals detected (PC1, PC2, PC3, PCV, PCF) such that several functions share the same restricted operating mode of the vehicle.

9. Vehicle control method according to Claim 8, including the steps of selecting (503, 504) the restricted operating mode as a function of at least one element state of the vehicle.

10. Computer program including program code instructions to perform the steps of the method according to either of Claims 8 and 9 when said program is run on one or more computers.
